# FASCICULE DE BREVET EUROPEEN

(11) **EP 0 735 104 B1**
(45) Date de publication et mention de la délivrance du brevet: **25.08.1999**
(21) Numéro de dépôt: 96400549.0
(22) Date de dépôt: 18.03.1996
(51) Int. Cl.: C08L 101/00, C08L 3/02, C08L 23/06, C08L 67/04

(54) **Procédé pour compatibiliser des polymères**
Verfahren zur Kompatibilisierung von Polymeren
Process for compatibilizing polymers

(30) Priorité: 21.03.1995 FR 9503274
(43) Date de publication de la demande: 02.10.1996
(73) Titulaire: Roquette Frères, 62136 Lestrem (FR)
(72) Inventeur: Videau, Didier, 59000 Lille (FR)
(74) Mandataire: Boulinguiez, Didier

(56) Documents cités:
- EP-A- 0 459 560
- PATENT ABSTRACTS OF JAPAN vol. 15, no. 285 (C-851) [4813] , 19 Juillet 1991 & JP-A-03 100065 (TOPPAN PRINTING CO LTD), 25 Avril 1991,

## Description

La présente invention a pour objet un nouveau procédé pour améliorer la compatibilité réciproque de polymères, l'un desdits polymères pouvant notamment être d'origine naturelle, en particulier un amidon.

Elle vise également les articles thermoformés, éventuellement soudés, obtenus à partir de mélanges de polymères résultant dudit procédé.

Au sens de la présente invention, la notion d'"amélioration de la compatibilité réciproque de deux polymères" doit, en premier lieu, être entendue comme l'amélioration des caractéristiques mécaniques du mélange polymérique résultant. Cette amélioration peut être reliée à une augmentation de l'affinité (y compris au niveau moléculaire), voire de la miscibilité même, des deux polymères.

Il est connu que de nombreuses industries sont déjà amenées à utiliser diverses associations entre deux, ou plus, polymères dits incompatibles ou faiblement compatibles, présentant notamment, du fait de leurs caractéristiques physico-chimiques respectives (polarité, température de fusion, taille moléculaire, etc...), une affinité ou une miscibilité limitée, voire nulle, ou pouvant uniquement s'exprimer dans des conditions de préparation et/ou de mise en oeuvre très particulières. Parmi ces industries on peut citer, en premier lieu, les industries des matières plastiques qui pour des raisons techniques (fabrication de matériaux polymériques composites notamment) ou économiques, font ou feront appel à des associations de deux, voire plus, polymères d'origine naturelle ou synthétique, présentant une incompatibilité notable et en particulier des possibilités de mixtion très limitées.

D'autres domaines d'application comme, par exemple, ceux concernant le textile, la papeterie, la cartonnerie, les adhésifs, les produits détergents ou phytosanitaires, utilisent ou seraient susceptibles d'utiliser industriellement, dans le cadre de procédés tels que le surfaçage, l'encollage, le couchage, le collage, le contrecollage, l'enrobage, la granulation ou autres, des mélanges à base de matériaux incompatibles ou faiblement compatibles, et notamment à base d'au moins un polymère plutôt (fortement) hydrophile ou polaire d'une part et d'au moins un polymère plutôt (fortement) hydrophobe ou apolaire d'autre part.

L'intérêt commercial de tels mélanges réside principalement dans l'obtention d'un rapport ''performances / prix'' acceptable permettant d'entrevoir le remplacement de polymères plus classiques frappés d'obsolescence et/ou le développement de nouvelles applications industrielles.

Cependant, la conception, la mise au point ou l'exploitation de tels mélanges polymériques est souvent entravée par l'incompatibilité, et notamment le manque d'affinité, voire de miscibilité, de leurs constituants.

L'introduction d'agents, appelés "agents de couplage'', ''promoteurs d'adhésion'' ou plus largement ''agents compatibilisants'', favorise l'association ou la miscibilité de polymères par ailleurs peu ou non compatibles et, ainsi, la préparation de mélanges polymériques présentant des propriétés spécifiques (résistance, rigidité, comportement rhéologique,...), pouvant être améliorées par rapport à celles obtenues en l'absence de tels agents.

A titre d'exemples, on peut rappeler le succès commercial de systèmes multiphasiques compatibilisés tels que le polystyrène "choc" (HIPS = High Impact Polystyrène) ou les copolymères ABS (acrylonitrile - butadiène - styrène).

D'une manière générale, on connaît deux techniques principales aptes à améliorer la compatibilité de polymères.

La première consiste à ajouter à deux polymères peu compatibles ou franchement incompatibles un tiers constituant capable de réagir avec le mélange polymérique au travers de réactions chimiques ou d'interactions spécifiques. Les copolymères greffés ou séquencés, les agents de réticulation ainsi qu'une grande variété de molécules de bas poids moléculaire entrent dans cette première catégorie d'agents compatibilisants. Le choix d'un copolymère greffé ou séquencé comme agent compatibilisant est généralement basé sur la miscibilité ou la réactivité de ses segments avec au moins l'un des composés du mélange.

La seconde technique de compatibilisation consiste à préparer puis mélanger des polymères convenablement fonctionnalisés au préalable et donc capables d'engendrer les réactions chimiques ou interactions nécessaires à en augmenter l'affinité réciproque.

Cette fonctionnalisation peut être réalisée, entre autres, en solution ou au sein d'une extrudeuse et impliquer la formation, in situ, de copolymères greffés ou séquencés ou des réactions d'halogènation, sulfonation, etc... Ces agents compatibilisants contiennent des segments chimiquement identiques à ceux des polymères du mélange et agissent, a priori, en tant qu'agents d'interface.

A titre d'exemple, on peut citer en tant qu'agents compatibilisants :
a) de type copolymère réactif : les copolymères SAN / MA (poly (styrène - co-acrylonitrile / anhydride maléique), les mélanges ABS / PA 6 ou PA 6,6 (polyamide 6 ou 6,6),
b) de type copolymère non réactif : les polymères greffés PS / PE (polystyrène / polyéthylène), les copolymères S - EB - S (styrène - éthylène / butadiène, styrène),
c) de type composé de faible poids moléculaire : les agents de réticulation ou de greffage. Ainsi, le greffage d'une paraffine chlorée sur du PP (polypropylène) permet de compatibiliser un système PP - PVC (polychlorure de vinyle).

Pour plus de précisions concernant la nature, les fonctions, les propriétés et les domaines d'application d'agents compatibilisants, l'on pourra se reporter à l'article de M. XANTHOS dans "POLYMER ENGINEERING AND SCIENCE," MID-NOVEMBER 1988, vol. 28 N°21, pp 1392 - 1400. Parmi les polymères utilisés dans la préparation de mélanges polymériques destinés à l'industrie, en particulier des matières plastiques, il est largement fait appel aux polymères d'origine naturelle tels que par exemple les amidons, les polyglucanes, polyfructanes et polyxylanes, les gommes (arabique, guar, xanthane, karaya, tragacanthe, ghatti, de caroube, etc...), les dextranes, les celluloses et hémicelluloses, la lignine, les pectines, les protéines animales et végétales, les latex naturels, les polyesters naturels, notamment les poly hydroxyalcanoates d'origine microbienne. Les polymères naturels ont pour avantages, entre autres, d'être peu coûteux, renouvelables et biodégradables. Ils ont pour principaux inconvénients de conférer aux articles finis qui les contiennent des propriétés mécaniques diminuées et/ou une sensibilité à l'eau significativement augmentée.

Il est donc généralement obligatoire, en pratique industrielle, d'associer au moins un polymère naturel à au moins un polymère synthétique, ce dernier étant, notamment choisi parmi les polyoléfines, les polystyrènes, les polymères et copolymères vinyliques, les polyacétals, les polyesters, les polycarbonates, les poly (alkylène téréphthalates), les polyaryléthers, les polyimides, les oxydes de polyalkylène, et leurs dérivés.

De tels polymères synthétiques sont notamment décrits dans la demande de brevet EP 0327 505, en particulier de la ligne 13 page 3 à la ligne 31 page 3, ce passage étant incorporé à la présente description.

Il a, par exemple, été souvent préconisé d'associer l'amidon à un polymère synthétique présentant un caractère hydrophobe, notamment une polyoléfine, et ce, aux fins que le mélange polymérique résultant présente une résistance à l'eau améliorée. Toutefois, la nature respectivement très polaire de l'amidon et apolaire de la polyoléfine (polyéthylène) fait que le mélange polymérique obtenu est très hétérogène et inexploitable industriellement.

Aux fins d'augmenter l'affinité de ces deux polymères, il a été proposé, comme décrit dans le brevet EP 0554 939, d'utiliser une composition dite "composition d'alliage" contenant, en tant qu'agent compatibilisant (ou 'agent de couplage"), au moins une polyoléfine modifiée par des fonctions chimiques actives à l'égard des fonctions hydroxyles (OH) de l'amidon et apportées par la mise en oeuvre d'anhydride maléique.

On observe cependant que pour un amidon donné, en l'occurrence un amidon de maïs standard, le choix d'un agent compatibilisant efficace reste très délicat. Ainsi, toutes conditions étant égales par ailleurs, une polyoléfine modifiée donnée, par exemple un copolymère éthylène / ester acrylique / anhydride maléique de type LOTADER® 3200, se révèle être un bon agent compatibilisant, tandis qu'une autre polyoléfine modifiée de nature chimique proche (LOTADER 3700) ne permet aucunement de résoudre les problèmes d'hétérogénéité et de résistance observés au niveau de l'article fini obtenu (film de 1mm d'épaisseur).

Le brevet US 5 234 978 décrit également la compatibilisation d'un polymère synthétique particulier, en l'occurrence un polyéthylène linéaire de faible densité (LLDPE), avec une catégorie particulière d'amylacés, en l'occurrence des amidons alkylés ou hydroxyalkylés, et ce par mise en oeuvre d'un agent compatibilisant spécifiquement sélectionné parmi les copolymères éthylène / acétate de vinyle, éthylène / acide acrylique, acétate de vinyle / acide (méth)acrylique et les terpolymères éthylène / acétate de vinyle / acide (méth)acrylique.

Le brevet EP 542 155 décrit l'utilisation d'agents compatibilisants, y compris d'amidons modifiés comme les acétates d'amidon ou des copolymères greffés d'amidon, en vue d'améliorer, par interaction physique et/ou réaction chimique, l'adhésion d'une première phase constituée spécifiquement d'ester de cellulose et d'une seconde phase à base d'amidon thermoplastique.

Il résulte globalement de l'état actuel de la technique, que :
1) les agents compatibilisants sont, en pratique, le plus souvent mis en oeuvre en vue d'associer deux polymères spécifiques et qu'il est très difficile de transposer l'utilisation d'un agent compatibilisant conçu pour un couple de polymères A/B à un couple de polymères C/D ou même à un couple de polymères A/C ou B/D.
2) La transposition d'un agent compatibilisant de l'application pour laquelle il a été spécifiquement conçu, (par exemple la compatibilisation de deux polymères en phase fondue) à d'autres applications impliquant des caractéristiques de mise en oeuvre différentes (par exemple une mise en oeuvre du mélange polymérique en milieu aqueux), n'est pas aisée industriellement.
3) l'utilisation de composés amylacés en tant qu'agents compatibilisants est, en pratique industrielle, très restreinte car impliquant leur modification préalable, opération souvent délicate et/ou coûteuse, notamment par techniques de greffage.
4) L'utilisation industrielle de composés amylacés en tant qu'agents compatibilisants ne peut être que limitée par les problèmes de diminution des propriétés mécaniques et de sensibilité à l'eau qu'ils engendrent.

Il résulte donc de ce qui précède qu'il existait un réel besoin de trouver un moyen industriel qui permette de manière simple et peu coûteuse d'améliorer la compatibilité d'une grande variété de polymères et par là même d'améliorer les propriétés, en particulier mécaniques, des articles obtenus à partir desdits polymères.

Et le mérite de la Société Demanderesse est d'avoir trouvé qu'un tel moyen pouvait être constitué par la mise en oeuvre d'une cyclodextrine. Plus précisément, la présente invention a pour objet un procédé pour améliorer la compatibilité réciproque de polymères, caractérisé par le fait que l'on fait comporter au mélange desdits polymères une quantité efficace de cyclodextrine.

Par "quantité efficace", on entend une quantité de cyclodextrine suffisante pour conférer au mélange desdits polymères des propriétés mécaniques améliorées.

Dans le cadre de l'invention, on entend par le terme "cyclodextrine" l'alpha, la béta ou la gamma cyclodextrine, ou leurs mélanges, ainsi que les dérivés de ces cylodextrines. On peut rappeler que l'alpha, la béta et la gamma cyclodextrine sont des macrocycles contenant respectivement six, sept et huit motifs glucose. Le terme "dérivé" doit être compris comme comprenant tout macrocycle tel qu'il vient d'être défini, dans lequel l'un au moins des motifs glucose constitutifs est substitué, au moins en un endroit, par un groupement ou une molécule qui peuvent être de taille et de fonctionnalité très diverses, comme par exemple un groupement hydrophobe tel qu'un groupement alcènyl-succinylé, et notamment octènylsuccinylé, un groupement alcoylé ou hydroxyalcoylé, et notamment un groupement hydroxypropylé, un groupement ionique et notamment cationique, un groupement aminé ou sulfaté, ou une molécule de mono-, di- ou tri-saccharide telle qu'une molécule de glucose, fructose, maltose, saccharose ou maltotriose. Le terme "dérivé" englobe également les "polymères" de cyclodextrines obtenus par exemple par réaction des cyclodextrines avec des réactifs polyfonctionnels ou des cyclodextrines fixées, notamment greffées, sur des supports de toutes natures (silice, zéolithes, polymères synthétiques, cellulose, amidon, etc...).

De préférence, on met en oeuvre, dans le cadre de l'invention, au moins une cyclodextrine choisie dans le groupe constitué par l'alpha-cyclodextrine, la béta-cyclodextrine et leurs dérivés, tels que leurs dérivés alcényl-succinylés, (hydroxy)alcoylés ou ioniques, et les mélanges quelconques de ces produits. A titre indicatif, la béta-cyclodextrine (ci-après désignée BCD) non modifiée chimiquement est un agent compatibilisant particulièrement efficace et peu coûteux dans le cadre de l'invention.

La cyclodextrine peut être mise en oeuvre sous la forme d'une solution dont la concentration dépend, entre autres, de la solubilité de ladite cyclodextrine dans le solvant choisi (eau, alcool aliphatique, polyol ou autres) et des conditions opératoires utilisées (température notamment).

La cyclodextrine peut également être mise en oeuvre sous la forme pâteuse ou sous la forme d'une poudre cristalline ou amorphe obtenue par l'une quelconque des techniques de séchage connues de l'homme de l'art, y compris par étuvage, atomisation ou lyophilisation, ledit séchage pouvant être subséquent à une étape de cristallisation.

Il convient de rappeler à cet endroit de la description que l'utilisation de cyclodextrine dans l'industrie des matières plastiques est bien connue, notamment en vue d'introduire ou de protéger des principes actifs de nature et fonctions très diverses (parfums, arômes, pesticides, colorants, etc...) au sein desdites matières.

Parmi cette abondante littérature, on pourra citer les brevets Japonais N° 62 - 263047 et 63 - 212548, le brevet US 4 356 115 ainsi que les brevets européens EP 13 688, EP 458 464 et EP 361 087.

A titre d'exemple, le brevet Japonais N° 62 -263047 décrit des matériaux d'emballage composites à usage alimentaire comportant une couche de résine polyoléfinique dans laquelle des principes aromatiques sont encapsulés par une cyclodextrine.

Le brevet européen EP 458 464 décrit l'utilisation de cyclodextrines en vue de complexer des agents d'expansion. Les complexes obtenus permettent lors de la fluidification du plastique par traitement thermique, de libérer des gaz dans la masse et d'obtenir une structure dite "cellulaire" de densité significativement diminuée.

Le brevet européen EP 361 087 décrit par ailleurs l'introduction d'une cyclodextrine dans une composition polyoléfinique de manière à encapsuler les molécules odorantes indésirables (benzaldéhyde notamment) issues de la décomposition d'un agent de nucléation de type acétal d'alditol et notamment du dibenzylidène - sorbitol (DBS).

La réalisation de complexes d'inclusion entre les cyclodextrines et certains polymères a également été étudiée, notamment au travers des travaux de A. HARADA et Coll., publiés dans "Proc. Japan Acad., 69, 3, Ser. B (1993), pp 39-44".

Dans ce document, il est décrit la préparation et la caractérisation de complexes entre, respectivement, le polyéthylène glycol (PEG) et l'alpha-cyclodextrine, le polypropylène glycol (PPG) et la béta-cyclodextrine et un poly (methylvinyl ether) (PMeVe) et la gamma-cyclodextrine. Les cyclodextrines sont ici uniquement étudiées comme "composé hôte" de systèmes artificiels de reconnaissance moléculaire de polymères.

Il n'est en aucun cas décrit ou envisagé d'incorporer les complexes formés dans une quelconque phase polymérique qui serait incompatible avec le PEG, le PPG ou le PMeVE.

D'une manière générale, la littérature ne décrit ou n'envisage jamais la possibilité d'améliorer la compatibilité réciproque de polymères, par mise en oeuvre d'une cyclodextrine et en particulier d'améliorer, comme il sera décrit par ailleurs, les caractéristiques mécaniques d'un mélange polymérique par une telle mise en oeuvre.

Dans le cadre de la présente invention, la notion de "polymère" n'est en aucun cas limitative et inclut notamment et ce, sans que cette liste ne soit le moins limitative :
1) Les polymères d'origine naturelle choisis parmi les amidons et autres polymères de glucose ou polyglucanes comme ceux communément appelés "polydextroses", les polymères du fructose ou polyfructanes tels que par exemple l'inuline, les polymères du xylose ou polyxylanes, les dextranes, les gommes naturelles telles que les gommes xanthane, guar, arabique, etc..., les alginates, les carraghénanes, les celluloses et hémicelluloses, la lignine, les pectines, les protéines animales ou végétales telles que la gélatine ou les glutens de blé ou maïs, les latex naturels, les résines naturelles telles que la colophane, les polyesters naturels tels que les homopolymères ou copolymères des acides lactique, glycolique, hydroxybutyrique, hydroxypropionique, hydroxyvalérianique ou leurs sels.
2) Les polymères synthétiques choisis parmi les polyoléfines (telles que les polypropylènes et polyéthylènes), les polystyrènes, les polymères et copolymères vinyliques (tels que les polychlorures de vinyle (PVC) et les alcools polyvinyliques (PVOH)), les polyesters synthétiques (tels que les homo ou copolymères de lactones comme la poly - epsilon - caprolactone (PCL) ou la poly - alpha - valérolactone), les polyamides, les copolymères éthylène / acétate de vinyle et leurs dérivés, les copolymères éthylène / acide acrylique et leurs dérivés.

Il est entendu que, dans le cadre de l'invention, la notion de "polymère d'origine naturelle" comprend les matières polymériques d'origine végétale, microbienne ou animale qui ont été mentionnées ci-avant, ainsi que ces mêmes matières qui :
- soit subséquemment à leur isolement du milieu naturel dont elles sont issues, subissent au moins une étape de purification, de dilution, de concentration et/ou de modification par voie physique, chimique (y compris enzymatique) et/ou génétique,
- soit sont issues de matières vivantes (plantes, microorganismes, animaux) modifiées génétiquement.

Dans le cadre de l'invention, on fera appel en particulier, en tant que 'polymères d'origine naturelle", aux amidons, aux polyfructanes, aux celluloses et hémicelluloses, aux protéines végétales, aux polymères et copolymères d'acides lactique, glycolique, hydoxy-butyrique, hydroxy-propionique, hydroxy-valérianique, et tout préférentiellement aux amidons.

Par le terme "amidon", au sens de la présente invention, on entend tout type d'amidon, quelle qu'en soit l'origine, natif ou modifié et ce, par voie chimique, physique, et/ou génétique. Lorsque l'on fait appel à un amidon natif pour la constitution des compositions conformes à l'invention, celui-ci est notamment choisi dans le groupe comprenant les amidons natifs, naturels ou hybrides, provenant du maïs, du maïs à haute teneur en amylopectine (amidon waxy), du maïs à haute teneur en amylose, du blé, du riz, du pois, de la pomme de terre, du manioc, les coupes ou fractions qui peuvent en être faites ou obtenues telles que l'amylose, l'amylopectine, et les coupes granulométriques connues de l'homme de l'art sous les vocables d'amidon de blé "A" et amidon de blé "B", et les mélanges quelconques d'au moins deux quelconques des produits susmentionnés.

Lorsque l'on fait appel à un amidon modifié chimiquement en tant que polymère dans le cadre du procédé conforme à l'invention, celui-ci est notamment choisi dans le groupe comprenant les amidons modifiés par au moins l'une ou l'autre des techniques connues de plastification, d'éthérification, d'estérification, de réticulation, d'oxydation, de traitement alcalin, d'hydrolyse acide et/ou enzymatique.

On peut, à titre d'exemple, faire appel avantageusement à des amidons plastifiés par au moins un agent plastifiant, choisi dans le groupe comprenant, outre l'eau,
a) les sels d'acides hydroxy-carboxyliques, en particulier les lactates, gluconates et produits en contenant,
b) les polyols, en particulier le sorbitol, le mannitol, le maltitol, le maltotriitol, le xylitol, le lactitol, l'erythritol ou le glycérol, et les mélanges d'au moins deux polyols comme les mélanges sorbitol / maltitol, sorbitol / mannitol, sorbitol / xylitol, sorbitol / glycérol, sorbitol / mannitol, sorbitol / maltitol / glycérol, les hydrolysats d'amidon hydrogénés tels que ceux commercialisés par la Société Demanderesse sous les appellations "POLYSORB®", "MALTISORB®", NEOSORB®", et notamment les produits référencés POLYSORB® 70/12/12, 75/10/15, 75/05/55, 75/08/55 ou le produit MALTISORB® 75/75,
c) l'urée et ses dérivés tels que thiourée, bromure calcique d'urée, hydrochlorure d'urée, nitrate d'urée ou oxalate d'urée.

On peut, à titre d'exemple, faire également appel à des amidons éthérifiés par des groupements ioniques, en particulier cationiques, ou non ioniques, ces derniers pouvant consister en des amidons hydroxy-alkylés tels que des amidons hydroxypropylés ou hydroxy-éthylés. On peut également mettre en oeuvre des amidons estérifés par des groupements hydrophobes, en particulier alcénylsuccinylés et notamment n-octénylsuccinylés.

On peut également utiliser, dans le cadre de l'invention, des amidons préalablement modifiés physiquement, par exemple par traitement aux micro-ondes ou ultrasons, par cuisson-extrusion, par traitement sur tambour ou par compactage, lesdits amidons pouvant se présenter dans un état de destructuration totale, de destructuration partielle ou de simple gélatinisation ou prégélatinisation.

En outre, les amidons modifiés chimiquement tels que ceux décrits ci-avant peuvent, simultanément, antérieurement ou postérieurement au processus de modification chimique, avoir été soumis à un tel traitement de modification physique.

Selon une première variante du procédé selon l'invention, la quantité de cyclodextrine, par exemple de bêta-cyclodextrine ou de l'un de ses dérivés, que l'on fait comporter au mélange desdits polymères est telle qu'elle représente d'environ 0,5 à environ 20 %, de préférence de 1 à 10 %, en poids du mélange de polymères résultant.

Selon une seconde variante, le procédé selon l'invention est caractérisé par le fait que l'un au moins desdits polymères est d'origine naturelle et est choisi dans le groupe comprenant les amidons, les polyfructanes, les celluloses et hémicelluloses, les protéines végétales, les polymères et co-copolymères d'acides lactique, glycolique, hydroxybutyrique, hydroxypropionique ou hydroxyvalérianique et les mélanges quelconques de ces produits.

De manière préférentielle, on fait appel, en tant que polymère naturel, à au moins un amidon, ce dernier pouvant préalablement avoir été modifié par voie physique et/ou chimique y compris par plastification à l'aide, par exemple, d'un au moins des agents du type "sel d'acide hydroxycarboxylique" ou "polyol" précédemment décrits.

Selon une autre variante, le procédé selon l'invention est caractérisé par le fait que l'un au moins desdits polymères est d'origine synthétique et peut notamment être choisi parmi les polyoléfines, les polystyrènes, les polymères et copolymères vinyliques, et les polyesters synthétiques.

En outre, la Société Demanderesse a trouvé que les cyclodextrines étaient particulièrement aptes à compatibiliser, et notamment à améliorer les propriétés de résistance mécanique, de mélanges polymériques à base, d'une part, d'au moins un amidon, notamment un amidon plastifié, et d'autre part, d'au moins un polymère synthétique choisi parmi les polyoléfines, notamment les polyéthylènes et polypropylènes, les polystyrènes, les polymères et copolymères vinyliques, ainsi que les polyesters synthétiques, notamment la poly - epsilon - caprolactone (PCL). De tels mélanges polymériques ainsi compatibilisés sont tout particulièrement intéressants dans le domaine des matières plastiques.

De manière préférentielle, le procédé selon l'invention est caractérisé par le fait que :
- l'un desdits polymères est un amidon,
- un autre desdits polymères est un polymère d'origine synthétique, et
- le rapport pondéral entre amidon et polymère synthétique au sein du mélange se situe entre environ 1/20 et environ 20/1, de préférence entre 1/10 et 10/1.

La Société Demanderesse a, entre autres, observé que le procédé selon l'invention était particulièrement applicable à des mélanges de polymères présentant un rapport pondéral entre amidon et polymère synthétique se situant entre environ 1/5 et 5/1.

Dans le cadre de l'invention, le mélange de polymères dont la compatibilité réciproque est améliorée par l'introduction d'une cyclodextrine peut comporter un ou plusieurs adjuvants.

Par "adjuvants" au sens de la présente invention on entend notamment et ce, sans que cette liste ne soit limitative :
- un ou plusieurs agents plastifiants tels que ceux décrits précédemment, en particulier un ou plusieurs polyols et leurs mélanges, y compris leurs mélanges préconstitués de type "hydrolysat d'amidon hydrogéné",
- une ou plusieurs charges minérales telles que, par exemple, les oxydes de titane, silice ou aluminium, le talc, le carbonate de calcium et leurs mélanges,
- un ou plusieurs agents hydrofugeants tels que ceux de nature organosilicique et par exemple les siliconates de métaux alcalins ou alcalino - terreux, les huiles silicones et leurs mélanges.
- un ou plusieurs agents de nucléation / clarification de polymères synthétiques (notamment du type polyoléfines, comme les polypropylènes et polyéthylènes) par exemple les acétals d'alditol de type dibenzylidène - sorbitol (DBS) et leurs dérivés.

De tels dérivés résultent en particulier de la déhydrocondensation d'un alditol (par exemple le sorbitol) avec deux molécules de benzaldéhyde dont l'une au moins est substituée, en au moins un endroit, par un groupement ou une molécule quelconque, de préférence un groupement alcoylé (méthylé, éthylé ou autre) ou halogène (fluor, chlore ou autre).

Ladite substitution peut notamment avoir lieu en position dite "ortho", "méta" et/ou "para" du cycle benzénique. De tels agents de nucléation sont connus, entre autres, sous les appellations "DISORBENE®", "MILLAD®", "GEL-ALL" ou "NC-4".
- un ou plusieurs agents de coloration, anti-flamme, de lubrification, anti-oxydants, fongicides ou bactéricides.
- un ou plusieurs agents compatibilisants classiquement utilisés dans l'art antérieur, par exemple les agents "de couplage" décrits au niveau du brevet EP 554 969 précité.

La teneur en eau du mélange de polymères obtenu par le procédé selon l'invention n'est pas un paramètre prépondérant en vue de son utilisation ultérieure, en particulier pour l'obtention d'articles thermoformés, puis éventuellement soudés.

On s'assurera simplement que ledit mélange présente une humidité telle que son alimentation au niveau des dispositifs ultérieurs de mélange ou de transformation (extrudeurs, malaxeurs ou presses à injecter) peut être assurée convenablement. En pratique, cette humidité est au plus égale à 40 % environ et se situe notamment entre environ 0,5 et environ 30 %.

Il convient de souligner que dans le cadre du procédé selon l'invention, la mise en oeuvre et la mise en présence entre eux des polymères, de la cyclodextrine, et des adjuvants éventuels, y compris de tout agent plastifiant, au sein du mélange de polymères peuvent s'effectuer selon une multitude de variantes, notamment en ce qui concerne la forme d'introduction (forme liquide, visqueuse ou solide telle que poudre ou granulats, introduction par mélange intime ou par pulvérisation, etc...) et le moment d'introduction (introduction dès le départ ou fractionnée dans le temps) de chacun de ces constituants au sein dudit mélange.

Selon une variante préférentielle du procédé, la cyclodextrine est apportée au sein du mélange de polymères sous la forme d'une composition à fonction compatibilisante contenant, outre ladite cyclodextrine, au moins un constituant choisi parmi les polymères constitutifs dudit mélange , les agents plastifiants (en particulier les polyols et leurs mélanges), les agents de nucléation correspondant aux acétals d'alditol, et les agents compatibilisants correspondant aux copolymères éthyléniques.

Selon une variante avantageuse ladite composition contient au moins une cyclodextrine, en particulier la BCD ou l'un de ses dérivés et au moins un agent plastifiant et/ou un amidon.

Ce dernier peut, comme déjà précisé, avoir préalablement subi une modification chimique et/ou physique de toute nature, et notamment être constitué d'un amidon plastifié.

Lorsque ladite composition contient, outre une cyclodextrine, au moins un amidon en tant que polymère constitutif du mélange, le rapport pondéral entre cyclodextrine et amidon est généralement compris entre environ 1/1 et environ 1/100, de préférence entre 1/2 et 1/50, et plus préférentiellement encore entre 1/5 et 1/50.

Lorsque par ailleurs cette composition contient, outre une cyclodextrine, au moins un agent plastifiant, en particulier un polyol, le rapport pondéral entre cyclodextrine et agent plastifiant est généralement compris entre environ 2/1 et environ 1/50, de préférence entre 2/1 et 1/10, et plus préférentiellement encore entre 1/1 et 1/10.

D'autres compositions sont envisageables dans le cadre de l'invention telles que celles associant une cyclodextrine et éventuellement un agent plastifiant à au moins :
- un amidon et un agent de nucléation tel que le DBS ou l'un quelconque de ses dérivés, en particulier ses dérivés éthylés, méthylés ou halogènés,
- un amidon et un polymère synthétique tel qu'un polyéthylène, polystyrène, PVOH, PVC ou de la PCL,
- un amidon ou un polymère synthétique et un agent compatibilisant classique tel que ceux décrits au niveau du brevet EP 554 939 précité.

La teneur en eau de ces compositions n'est pas un paramètre prépondérant en vue de son application à la préparation subséquente d'un mélange polymérique compatibilisé.

On s'assurera simplement qu'une telle composition présente une humidité telle que son alimentation au niveau des dispositifs ultérieurs de mélange ou de transformation peut être assurée convenablement. En pratique, cette humidité est au plus égale à 40 % environ et se situe notamment entre environ 0,5 et environ 30 %.

Cette composition peut, après mise en présence entre eux de tout ou partie de ses constituants, subir un traitement apte, entre autres, à en améliorer l'homogénéité. Ce traitement peut être effectué sur tous types de dispositifs conventionnels, en particulier ceux classiquement utilisés pour la transformation, en continu ou discontinu, des matières plastiques et élastomères et notamment des dispositifs du type extrudeurs monovis ou bivis, malaxeurs ou presses à injecter.

A titre d'exemple, on peut citer des dispositifs de constitution modulaire tels que les co-malaxeurs type MDK/E 46 ou MDK/E 70 commercialisés par la Société BUSS.

On peut également mettre en oeuvre une extrudeuse bivis conique de type RHEOMEX TW 100 ou un malaxeur plastographe BRABENDER®.

Après transformation, par exemple par extrusion ou injection, la composition peut être avantageusement granulée par tous types de dispositifs de granulation. La composition peut également, après mise en présence entre eux de tout ou partie de ses constituants, subir un traitement d'atomisation.

En suite de quoi ladite composition se présente avantageusement sous la forme de granulats ou d'une poudre.

La présence ou l'introduction d'une telle composition à base de cyclodextrine, par exemple sous forme de granulats, au sein d'un mélange polymérique ne pose aucun problème technique particulier.

Au contraire et comme il a été déjà souligné, la mise en oeuvre d'une cyclodextrine permet, de par son effet de compatibilisation, la préparation généralement plus aisée d'un mélange polymérique, celui-ci présentant des caractéristiques mécaniques significativement améliorées.

Et il est remarquable d'observer que les avantages ainsi mis en évidence par la Société Demanderesse peuvent être obtenus avec de faibles taux d'introduction en cyclodextrine au sein de mélanges polymériques, y compris des taux de l'ordre d'environ 0,5 à environ 5 % en poids, exprimés par rapport au poids total du mélange polymérique.

Et ces avantages, notamment en termes d'amélioration des caractéristiques mécaniques, sont d'autant plus surprenants que les cyclodextrines se révèlent être, comme il sera décrit par ailleurs, des agents compatibilisants applicables à une gamme très étendue de mélanges polymériques.

En ce qui concerne plus particulièrement les mélanges de polymères dont l'un, au moins, est un amidon, la Société Demanderesse a, en outre, trouvé que des compositions associant une cyclodextrine audit amidon et à un agent plastifiant étaient particulièrement aptes à améliorer les caractéristiques mécaniques desdits mélanges et ce, dès lors que lesdites compositions présentaient :
- un rapport pondéral cyclodextrine / amidon compris entre environ 1/5 et environ 1/50, et
- un rapport pondéral cyclodextrine / agent plastifiant compris entre environ 1/1 et environ 1/10.

De telles compositions, lesquelles constituent des produits nouveaux, peuvent avantageusement se présenter sous forme de granulats ou de poudre.

En suite de quoi et quelles que soient les conditions de mise en oeuvre et de mise en présence entre eux, de la cyclodextrine, des polymères dont la compatibilité réciproque doit être améliorée, ainsi que des adjuvants éventuels, on dispose désormais, en tant que produits industriels, de nouveaux mélanges de polymères présentant des caractéristiques mécaniques améliorées en regard de celles obtenues en absence de toute cyclodextrine.

De tels mélanges polymériques améliorés peuvent être appliqués à la préparation d'articles de toutes formes (joncs, tubes, films, granulés, capsules ou formes plus élaborées tels que des emballages, y compris de type "blister"), et de toutes destinations et ce, par mise en oeuvre de toute technique disponible de thermoformage, et notammment par extrusion, co-extrusion, injection, soufflage ou calandrage, puis de toute technique éventuelle de soudage, y compris par application de hautes fréquences ou d'hyperfréquences ou de micro-ondes.

Et il est remarquable de souligner que la présente invention dont le concept inventif général résulte en l'utilisation de cyclodextrines pour améliorer la compatibilité réciproque de polymères permet l'obtention, dans des conditions aisément industrialisables, d'articles thermoformés, éventuellement soudés, à base de polymères jugés jusqu'alors comme non ou faiblement compatibles, lesdits articles présentant des caractéristiques, en particulier mécaniques, parfaitement conformes, voire supérieures, aux exigences actuelles de la technique.

De tels articles peuvent notamment résulter de l'utilisation de cyclodextrines pour améliorer la compatibilité réciproque entre d'une part un polymère naturel comme un amidon et d'autre part un polymère synthétique comme la poly-epsilon-caprolactone ou un polyéthylène.

L'invention pourra être encore mieux comprise à l'aide des exemples qui suivent et qui font état de certains modes de préparation et d'application particulièrement avantageux du mélange de polymères amélioré selon l'invention.

### EXEMPLE 1 :

### PREPARATION DE COMPOSITIONS COMPATIBILISANTES A BASE DE CYCLODEXTRINE (BCD) ET D'UN AMIDON PLASTIFIE

Dans le cadre de cet exemple on réalise l'extrusion puis la granulation de compositions associant différents taux de béta-cyclodextrine (BCD) à un amidon préalablement plastifié.

L'extrusion est réalisée sur une extrudeuse bivis conique RHEOMEX TW 100 associée à une unité motrice RHEOCORD 90 (HAAKE).

Le fourreau est conique et présente une longueur de 300mm. L'extrudeuse est équipée de trois zones de chauffage le long du fourreau (zones 1, 2 et 3) et d'une zone de chauffage en tête (zone 4) ainsi que de capteurs mixtes pression et température en zones 2, 3 et 4. Les deux vis (jeu de vis standard référencé 557 - 2211) sont de type interpénétrantes et contra-rotatives.

La filière ronde utilisée a un diamètre de 4mm.

La composition extrudée puis granulée est composée de :
- 70 % d'amidon de maïs riche en amylose de type EURYLON® VII fourni par la Demanderesse,
- 20 % de sorbitol poudre NEOSORB® P 60 également fourni par la Demanderesse, et
- 10 % d'eau déminéralisée.

A cette composition sont ajoutés respectivement 0 %, 4 %, 10 % et 14 % en poids de béta-cyclodextrine (BCD) commercialisée par la Demanderesse sous l'appellation KLEPTOSE® B.

Les conditions d'extrusion des compositions ainsi obtenues sont les suivantes :
- température de consigne
   zone 1 : 95°C,
   zone 2 : 100°C,
   zone 3 : 103°C,
   zone 4 : 105°C.
- vitesse des vis : 100 tours/mn.

Les extrudats obtenus, se présentant sous forme de joncs, sont ensuite granulés sur un granulateur de marque LANCELIN. Les granulats obtenus se présentent sous forme de cylindres d'une hauteur d'environ 3 à 4 mm et d'un diamètre d'environ 4 mm.

On observe globalement que la présence de BCD au sein de ces compositions et ce, y compris à des taux d'incorporation élevés (supérieur ou égal à 10 % en poids), ne nuit aucunement à leurs possibilités d'extrusion puis de granulation.

### EXEMPLE 2 :

### AMELIORATION DE LA COMPATIBILITE D'UN POLYETHYLENE ET D'UN AMIDON

Les granulats de compositions résultant de l'EXEMPLE 1 sont, comme il sera décrit ci-après, aptes à être mis directement en présence d'un polymère incompatible ou faiblement compatible avec l'amidon, tel qu'un polyéthylène et ce en vue de préparer un mélange polymérique aux caractéristiques mécaniques globalement améliorées.

Dans le cas présent, les granulats à base, notamment, de BCD et d'amidon obtenus selon l'EXEMPLE 1 sont mélangés à des quantités variables de granulats de polyéthylène basse densité de marque LACTENE® et de référence 1 200 MN 18, fournis par la Société ATO.

La composition de ces mélanges polymériques est reprise au niveau du TABLEAU 1 ci-après. Les mélanges témoin "T1", "T2" et "T3" sont exempts de cyclodextrine.

Ces mélanges de granulats sont injectés dans le moule à éprouvettes de traction et choc d'une presse à injecter de type ARBURG 18 T "ALL ROUNDER".

Les températures sur les deux corps de chauffe de la presse à injecter sont fixées à 110 - 120°C et la température du nez d'injection à 120 - 130°C. La pression d'injection est de 80 bars et la vitesse de 160 t/mn.

Le moule des éprouvettes est maintenu 45 secondes à 20°C avant ouverture.

Les articles thermoformés obtenus après injection des mélanges polymériques sont des éprouvettes en forme d'haltère normalisées de TYPE 1 selon la recommandation ISO R 527 et dont l'épaisseur est de 4 ± 0,5 mm.

Ces éprouvettes sont ensuite stockées pendant 48 heures dans une pièce climatisée à 20°C et 65 % d'humidité relative (HR).

Les propriétés mécaniques de chacun desdits mélanges polymériques sont évaluées sur les éprouvettes ainsi obtenues après injection et conditionnement.

Les tests d'évaluation sont réalisés en traction au moyen d'un dynamomètre de type "INSTRON 1122".

Les propriétés mécaniques principalement étudiées sont :
- le module de YOUNG, exprimé en MPa,
- la force à la rupture, exprimée en N,
- la contrainte à la rupture, exprimée en MPa, et
- la déformation à la rupture, exprimée en %.

Ces propriétés sont estimées sur une moyenne de 5 éprouvettes.

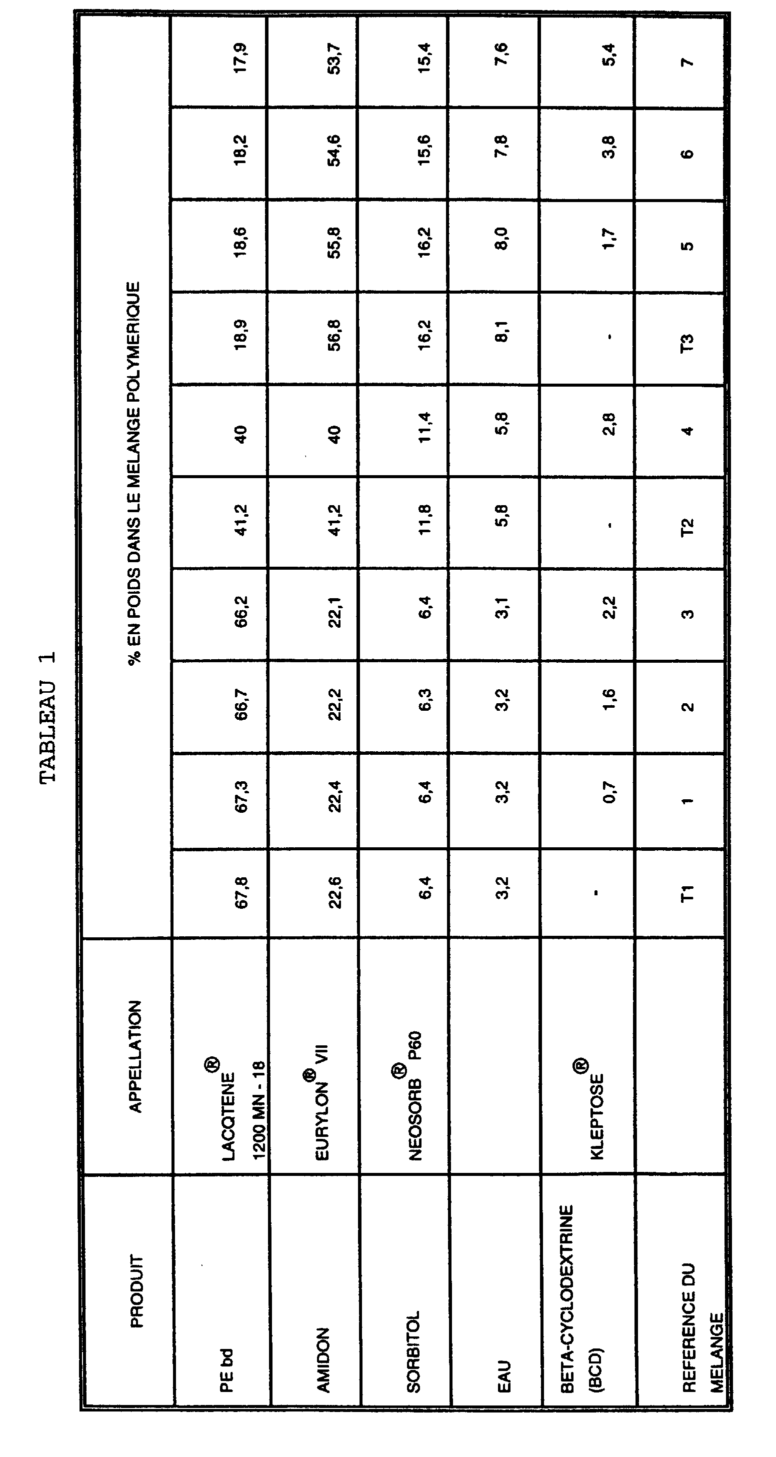

Le TABLEAU 2 ci-après reprend, pour chaque mélange polymérique, les caractéristiques mécaniques obtenues.

**TABLEAU 2**

| REFERENCE DU MELANGE | MODULE DE YOUNG (MPa) | FORCE A LA RUPTURE (N) | CONTRAINTE A LA RUPTURE (MPa) | DEFORMATION DE LA RUPTURE (%) |
|---|---|---|---|---|
| T1 | 77 | 260 | 7 | 79 |
| 1 | 92 | 299 | 9 | 92 |
| 2 | 89 | 294 | 8 | 91 |
| 3 | 91 | 299 | 8 | 88 |
| T2 | 83 | 152 | 4,5 | 24 |
| 4 | 104 | 249 | 7 | 47 |
| T3 | 67 | 118 | 3 | 17 |
| 5 | 83 | 172 | 5 | 30 |
| 6 | 80 | 191 | 5 | 34 |
| 7 | 84 | 185 | 5 | 38 |

Ces résultats montrent globalement que l'introduction de cyclodextrine, en l'occurrence de BCD, au sein de différents mélanges polymériques associant amidon et polyéthylène permet d'améliorer les caractéristiques mécaniques desdits mélanges, en particulier la force à la rupture, la contrainte à la rupture et la déformation à la rupture observées au niveau d'articles thermoformés, en l'occurrence injectés, obtenus à partir de tels mélanges.

Et il est remarquable de noter qu'une telle amélioration desdites propriétés mécaniques est significative dès la mise en oeuvre de faibles taux de cyclodextrine. A titre d'exemples, des taux d'introduction de l'ordre de 0,7 à 2,8 %, exprimé en poids par rapport au poids du mélange des polymères résultant, se révèlent ainsi être des quantités efficaces au sens de la présente invention.

### EXEMPLE 3 :

### AMELIORATION DE LA COMPATIBILITE D'UN AMIDON ET DE LA POLYCAPROLACTONE

Au niveau de cet exemple, on utilise les granulats obtenus, selon les conditions décrites au niveau de l'EXEMPLE 1, à partir des compositions ci-après :
1) une composition à base de 70 % EURYLON® VII + 20 % NEOSORB® P60 + 10 % eau. Cette composition amylacée "témoin" est exempte de toute cyclodextrine,
2) une composition associant ladite "composition témoin" à 10 %, en poids, de BCD KLEPTOSE®. Cette composition amylacée peut être utilisée, comme décrit ci-après, dans le cadre du procédé de préparation de mélange polymérique selon l'invention.

Lesdits granulats sont ensuite mélangés à des granulats de polycaprolactone (PCL) d'appellation "CAPA 650®" commercialisée par la Société SOLVAY INTEROX. Le rapport pondéral entre granulats de composition amylacée et granulats de PCL est de 9/1.

Les mélanges polymériques ainsi obtenus sont ensuite injectés, conditionnés puis testés dans les mêmes conditions que celles décrites dans l'EXEMPLE 2.

Les résultats obtenus sont rassemblés au niveau du TABLEAU 3 ci-après.

**TABLEAU 3**

| BASE DU MELANGE POLYMERIQUE | MODULE DE YOUNG (MPa) | FORCE A LA RUPTURE (N) | CONTRAINTE A LA RUPTURE (MPa) | DEFORMATION A LA RUPTURE (%) |
|---|---|---|---|---|
| EURYLON® PLASTIFIE + CAPA 650® + BCD KLEPTOSE® | 110 | 246 | 9 | 39 |
| IDEM MAIS SANS CYCLODEXTRINE (TEMOIN) | 106 | 176 | 5 | 16 |

Il ressort clairement du TABLEAU 3 qu'une cyclodextrine permet d'améliorer la compatibilité d'un amidon et d'un polyster synthétique tel que la polycaprolactone, cette dernière étant par ailleurs de nature chimique éloignée d'un polyéthylène.

Les propriétés mécaniques du mélange polymérique amidon/PCL sont significativement améliorées de par la mise en oeuvre d'une cyclodextrine comme la BCD KLEPTOSE®.

Cette nette amélioration se traduit autant en termes de force à la rupture, de contrainte à la rupture que de déformation à la rupture, telles qu'évaluées au niveau des articles injectés (éprouvettes) obtenus.

### EXEMPLE 4 :

**AMELIORATION DE LA COMPATIBILITE D'UN AMIDON DE BLE ET D'UN** **POLYETHYLENE BASSE DENSITE**

On réalise l'extrusion puis la granulation et ce, dans les conditions décrites au niveau de l'EXEMPLE 1, respectivement de :
- une composition amylacée "témoin" contenant 70 % d'amidon de blé natif + 20 % de sorbitol poudre NEOSORB® P60 + 10 % d'eau déminéralisée,
- une composition associant ladite composition amylacée "témoin" à 5 %, en poids, de BCD KLEPTOSE®.

Cette composition peut être utilisée, comme décrit ci-après, dans le cadre du procédé selon l'invention.

Les granulats ainsi obtenus sont ensuite mélangés à des granulats d'un polyéthylène basse densité (PE bd) de marque LACQTENE®, référencé 1 200 MN 18 et fourni par ATO.

La composition de ces granulats "témoin" et "selon l'invention" est reprise au niveau du TABLEAU 4 ci-après.

**TABLEAU 4**

| PRODUIT | APPELATION | MELANGE POLYMERIQUE | |
|---|---|---|---|
| | | TEMOIN | SELON L'INVENTION |
| PE bd | LACQTENE® 1200 MN 18 | 41,2 | 40 |
| AMIDON DE BLE NATIF | | 41,2 | 40 |
| SORBITOL | NEOSORB® P60 | 11,8 | 11,4 |
| EAU | | 5,8 | 5,7 |
| BETA-CYCLODEXTRINE | KLEPTOSE® | - | 2,9 |

Ces mélanges polymériques sont ensuite injectés, conditionnés puis testés dans les mêmes conditions que celles décrites dans l'EXEMPLE 2.

Les résultats obtenus sont rassemblés au niveau du TABLEAU 5 ci-après.

**TABLEAU 5**

| BASE DU MELANGE POLYMERIQUE | MODULE DE YOUNG (MPa) | FORCE A LA RUPTURE (N) | CONTRAINTE A LA RUPTURE (MPa) | DEFORMATION A LA RUPTURE (%) |
|---|---|---|---|---|
| BLE NATIF + PE bd + BCD KLEPTOSE® | 37 | 197 | 5 | 109 |
| IDEM MAIS SANS CYCLODEXTRINE (TEMOIN) | 38 | 155 | 4 | 96 |

On observe encore et ce, pour un nouveau couple de polymères (amidon de blé/PE bd) une amélioration significative des propriétés mécaniques du mélange polymérique de par l'introduction de cyclodextrine, conformément à l'invention.

Cette amélioration est notable dès l'introduction d'un faible taux de cyclodextrine, en l'occurrence moins de 3 %,en poids, de BCD.

### EXEMPLE 5 :

**AMELIORATION DE LA COMPATIBILITE D'UN AMIDON DE MAIS WAXY ET D'UN POLYETHYLENE BASSE DENSITE.**

On réalise l'extrusion puis la granulation et ce, dans les conditions décrites au niveau de l'EXEMPLE 1, respectivement de :
- une composition amylacée "témoin" contenant 70 % d'amidon de maïs cireux (produit WAXILYS® 200 commercialisé par la Demanderesse) + 20 % de NEOSORB® P60 + 10 % d'eau,
- une composition associant ladite composition amylacée "témoin" à 5 %, en poids, de BCD KLEPTOSE®.

Cette composition peut être utilisée, comme décrit ci-après, dans le cadre du procédé selon l'invention.

Les granulats ainsi obtenus sont ensuite mélangés à des granulats de PE bd d'appellation "LACQTENE® 1 200 MN _{18".}

La composition de ces granulats "témoin" et "selon l'invention" est reprise au niveau du TABLEAU 6.

**TABLEAU 6**

| PRODUIT | APPELATION | MELANGE POLYMERIQUE | |
|---|---|---|---|
| | | TEMOIN | SELON L'INVENTION |
| PE bd | LACQTENE® 1200 MN 18 | 41,2 | 40 |
| AMIDON | WAXILYS® 200 | 41,2 | 40 |
| SORBITOL | NEOSORB® P60 | 11,8 | 11,4 |
| EAU | | 5,8 | 5,7 |
| BETA-CYCLODEXTRINE | KLEPTOSE® | - | 2,9 |

Ces mélanges polymériques sont ensuite injectés, conditionnés puis testés dans les mêmes conditions que celles décrites dans l'EXEMPLE 2.

Les résultats obtenus sont rassemblés au niveau du TABLEAU 7 ci-après.

**TABLEAU 7**

| BASE DU MELANGE POLYMERIQUE | MODULE DE YOUNG (MPa) | FORCE A LA RUPTURE (N) | CONTRAINTE A LA RUPTURE (MPa) | DEFORMATION A LA RUPTURE (%) |
|---|---|---|---|---|
| MAÏS WAXY + PE bd + BCD KLEPTOSE® | 71 | 238 | 6 | 58 |
| IDEM MAIS SANS CYCLODEXTRINE (TEMOIN) | 65,5 | 178 | 4,5 | 27 |

On observe encore et ce, pour un nouveau couple de polymères (amidon de maïs cireux/PE bd), une augmentation significative des propriétés mécaniques du mélange polymérique de par l'incorporation de cyclodextrine, conformément à l'invention.

Et il convient de souligner que la très grande applicabilité des cyclodextrines en tant qu'agents améliorant la compatibilité réciproque de polymères, a été vérifiée par la Demanderesse qui a également observé une nette amélioration des propriétés mécaniques du mélange WAXILYS® 200 / LACQTENE® 1 200 MN 18 en remplacant l'association de 20 % de NEOSORB® P60 + 10 % d'eau, mise en oeuvre pour l'obtention des granulats selon l'invention, par respectivement :
- 20 % de maltitol poudre MALTISORB® P 200 + 10 % d'eau,
- 10 % de NEOSORB® P60 + 10 % de maltitol poudre MALTISORB® P 200 + 10 % d'eau,
- 15 % de NEOSORB® P60 + 5 % de xylitol poudre XYLISORB® 300 + 10 % d'eau,
- 30 % d'hydrolysat d'amidon hydrogéné POLYSORB® 70/12/12,
- 30 % d'hydrolysat d'amidon hydrogéné MALTISORB® 75/75,
- 15 % de glycérine + 15 % d'eau.
- 15 % de lactitol cristallisé LACTY de C.C.A. BIOCHEM + 15 % d'eau,
- 10 % d'erythritol cristallisé + 20 % d'eau. Dans tous les cas, on obtient au niveau des injectats résultants, une force à la rupture, une contrainte à la rupture et une déformation à la rupture significativement supérieures aux valeurs indiquées au niveau du TABLEAU 7 pour le mélange polymérique témoin.

### EXEMPLE 6 :

### AMELIORATION DE LA COMPATIBILITE D'UN AMIDON RICHE EN AMYLOSE ET DE POLYCAPROLACTONE

On soumet différents mélanges polymériques granulés à base, notamment, d'amidon (EURYLON® VII) et de polycaprolactone (PCL de type "CAPA 650®") et dont la composition est reprise au niveau du TABLEAU 8 ci-après, à un traitement d'injection tel que décrit au niveau de l'EXEMPLE 2.

**TABLEAU 8**

| PRODUIT | APPELATION | MELANGE POLYMERIQUE | | |
|---|---|---|---|---|
| | | TEMOIN | TEMOIN | SELON L'INVENTION |
| POLYCAPROLACTONE | CAPA 650® | 41,2 | 41,1 | 41,1 |
| AMIDON | EURYLON® VII | 41,2 | 38 | 38 |
| SORBITOL | NEOSORB® P60 | 11,7 | 10,8 | 10,8 |
| EAU | | 5,9 | 5,4 | 5,4 |
| BETA-CYCLODEXTRINE | KLEPTOSE® | - | - | 4,7 |
| COPOLYMERE ETHYLENIQUE | LOTADER® 3210 | - | 4,7 | - |

On évalue, comme décrit précédemment, les caractéristiques mécaniques obtenues par mise en oeuvre de BCD KLEPTOSE en regard de celles observées respectivement :
- en absence de toute cyclodextrine, et
- par mise en oeuvre, en tant qu'agent compatibilisant, de la même quantité (4,7 %) d'un copolymère éthylénique de type LOTADER®3210.

Les résultats sont repris au niveau du TABLEAU 9 ci-après.

**TABLEAU 9**

| BASE DU MELANGE POLYMERIQUE | MODULE DE YOUNG (MPa) | FORCE A LA RUPTURE (N) | CONTRAINTE A LA RUPTURE (MPa) | DEFORMATION A LA RUPTURE (%) |
|---|---|---|---|---|
| EURYLON® + CAPA 650® + BCD KLEPTOSE® | 198,3 | 416 | 10,6 | 44,5 |
| IDEM MAIS SANS CYCLODEXTRINE (TEMOIN) | 160,4 | 377,9 | 9,7 | 26,8 |
| IDEM MAIS AVEC LOTADER® ET SANS CYCLODEXTRINE (TEMOIN) | 146,9 | 377,4 | 9,6 | 34,4 |

On constate que l'agent compatibilisant selon l'art antérieur est ici pratiquement inefficace alors que la BCD améliore significativement les propriétés mécaniques du mélange polymérique à base d'amidon + PCL et ce, y compris lorsque ces deux polymères sont, comme dans le cas présent, introduits en quantités pratiquement équivalentes (environ égales à 40 % en poids) au sein dudit mélange.

### EXEMPLE 7 :

### AMELIORATION DE LA COMPATIBILITE D'UN AMIDON RICHE EN AMYLOSE ET DE POLYETHYLENE BASSE DENSITE

On soumet différents mélanges polymériques granulés à base, notamment, d'amidon (EURYLON® VII) et de polyéthylène (PE bd de type "LACQTENE® 1 200 MN 18) et dont la composition est reprise au niveau du TABLEAU 10 ci-après, à un traitement d'injection tel que décrit au niveau de l'EXEMPLE 2.

**TABLEAU 10**

| PRODUIT | APPELATION | MELANGE POLYMERIQUE | | | |
|---|---|---|---|---|---|
| | | TEMOIN | TEMOIN | SELON L'INVENTION | SELON L'INVENTION |
| PE bd | LACQTENE® 1200 MN 18 | 41,2 | 39,3 | 40 | 39,3 |
| AMIDON | EURYLON® VII | 41,2 | 41,1 | 40 | 41,1 |
| SORBITOL | NEOSORB® P60 | 11,8 | 11,2 | 11,4 | 11,2 |
| EAU | | 5,8 | 5,6 | 5,8 | 5,6 |
| DERIVE D'AMIDON | GLUCIDEX® 47 | - | 2,8 | - | - |
| BETA-CYCLODEXTRINE | KLEPTOSE® | - | - | 2,8 | - |
| ALPHA-CYCLODEXTRINE | | - | - | - | 2,8 |

On évalue, comme décrit précédemment, les caractéristiques mécaniques obtenus par mise en oeuvre respectivement :
- de BCD KLEPTOSE®,
- d'alpha-cyclodextrine,

en regard de celles observées en absence de toute cyclodextrine ou en présence d'une même quantité (2,8 %) d'un hydrolysat d'amidon de type GLUCIDEX® 47 commercialisé par la Demanderesse.

Les résultats sont repris au niveau du TABLEAU 11 ci-après.

**TABLEAU 11**

| BASE DU MELANGE POLYMERIQUE | MODULE DE YOUNG (MPa) | FORCE A LA RUPTURE (N) | CONTRAINTE A LA RUPTURE (MPa) | DEFORMATION A LA RUPTURE (%) |
|---|---|---|---|---|
| EURYLON® + PE bd + BCD KLEPTOSE® | 104,4 | 248,7 | 7,2 | 47,2 |
| EURYLON® + PE bd + ALPHA-CYCLODEXTRINE | 76,9 | 254,4 | 6,5 | 58,4 |
| IDEM MAIS SANS CYCLODEXTRINE (TEMOIN) | 82,8 | 151,9 | 4,5 | 24,1 |
| IDEM MAIS AVEC GLUCIDEX® 47 ET SANS CYCLODEXTRINE (TEMOIN) | 60,6 | 188,7 | 4,8 | 33,9 |

On constate que dans un mélange polymérique à base de quantités pratiquement équivalentes (environ égales à 40 % en poids) d'amidon et de PE bd, la mise en oeuvre d'une cyclodextrine permet également d'améliorer significativement les propriétés mécaniques dudit mélange.

Et il est remarquable de noter que non seulement, une béta-cyclodextrine, mais également une alpha-cyclodextrine peuvent constituer des agents compatibilisants particulièrement efficaces. Ces produits sont significativement plus performants qu'un dérivé d'amidon de type GLUCIDEX® 47.

## Revendications

1. Procédé pour améliorer la compatibilité réciproque de polymères, caractérisé par le fait que l'on fait comporter au mélange desdits polymères une quantité efficace de cyclodextrine.

2. Procédé selon la revendication 1, caractérisé en ce que la quantité de cyclodextrine représente d'environ 0,5 à environ 20 %, de préférence de 1 à 10 %, en poids du mélange résultant.

3. Procédé selon l'une des revendications 1 ou 2, caractérisé par le fait que l'un au moins desdits polymères est un polymère d'origine naturelle choisi parmi les amidons, les polyfructanes, les celluloses et hémicelluloses, les protéines végétales, les polymères et copolymères d'acides lactique, glycolique, hydroxybutyrique, hydroxypropionique ou hydroxyvalérianique.

4. Procédé selon l'une des revendications 1 à 3, caractérisé par le fait que l'un au moins desdits polymères est un polymère d'origine synthétique choisi parmi les polyoléfines, les polystyrènes, les copolymères vinyliques et les polyesters synthétiques.

5. Procédé selon l'une des revendications 3 ou 4, caractérisé par le fait que :
- l'un desdits polymères est un amidon,
- un autre desdits polymères est un polymère d'origine synthétique, de préférence un polyéthylène, un polypropylène, un polystyrène, un alcool polyvinylique (PVOH), un polychlorure de vinyle (PVC) ou de la poly-epsilon-caprolactone (PCL),
- le rapport pondéral entre l'amidon et le polymère d'origine synthétique au sein du mélange se situe entre environ 1/20 et environ 20/1, de préférence entre 1/10 et 10/1.

6. Procédé selon l'une des revendications 1 à 5, caractérisé par le fait que la cyclodextrine est apportée sous la forme d'une composition contenant, outre ladite cyclodextrine, au moins un constituant choisi parmi les polymères constitutifs du mélange de polymères, les agents plastifiants, les agents de nucléation constitués par des acétals d'alditol et les agents compatibilisants constitués par des copolymères éthyléniques.

7. Procédé selon la revendication 6, caractérisé par le fait que le polymère constitutif du mélange est un amidon et que le rapport pondéral entre cyclodextrine et amidon est compris entre environ 1/1 et environ 1/100, de préférence entre 1/2 et 1/50, et plus préférentiellement encore entre 1/5 et 1/50.

8. Procédé selon l'une des revendications 6 ou 7, caractérisé par le fait que la composition contient au moins un agent plastifiant, en particulier au moins un polyol, le rapport pondéral entre cyclodextrine et agent plastifiant étant compris entre environ 2/1 et environ 1/50, de préférence entre 2/1 et 1/10 et plus préférentiellement encore entre 1/1 et 1/10.

9. Utilisation d'un mélange de polymères obtenu selon l'une des revendications 1 à 8 pour la préparation, notamment par extrusion, co-extrusion, moulage par injection, moulage par soufflage ou calandrage, d'articles thermoformés puis éventuellement soudés, notamment par application de hautes fréquences, d'hyperfréquences ou de micro-ondes.

10. Composition à base d'amidon et de plastifiant, caractérisée en ce qu'elle contient une cyclodextrine, que le rapport pondéral entre la cyclodextrine et l'amidon est compris entre environ 1/5 et environ 1/50, et que le rapport pondéral entre la cyclodextrine et l'agent plastifiant est compris entre environ 1/1 et environ 1/10, ladite composition se présentant de préférence sous forme d'une poudre ou de granulats.

11. Utilisation d'une cyclodextrine pour améliorer la compatibilité réciproque de polymères, en particulier la compatibilité réciproque d'un polymère naturel et d'un polymère synthétique et notamment la compatibilité réciproque d'une part d'un amidon et d'autre part de la poly-epsilon-caprolactone ou d'un polyéthylène.

## Patentansprüche

1. Verfahren zur Verbesserung der reziproken Kompatibilität von Polymeren, dadurch gekennzeichnet, daß man in ein Gemisch dieser Polymeren eine wirksame Menge an Cyclodextrin einbringt.

2. Verfahren nach Anspruch 1, dadurch gekennzeichnet, daß die Menge an Cyclodextrin etwa 0,5 bis etwa 20 %, bevorzugt 1 bis 10 %, bezogen auf das Gewicht des so erhaltenen Gemisches, beträgt.

3. Verfahren nach einem der Ansprüche 1 oder 2, dadurch gekennzeichnet, daß mindestens eines der Polymere ein Polymeres natürlichen Ursprungs, ausgewählt aus Stärken, Polyfructanen, Cellulosen und Hemicellulosen, Pflanzenproteinen, Polymeren und Copolymeren von Milch-, Glykol-, Hydroxybutter-, Hydroxypropion- oder Hydroxyvaleriansäuren, ist.

4. Verfahren nach einem der Ansprüche 1 bis 3, dadurch gekennzeichnet, daß mindestens eines der Polymere ein Polymeres synthetischen Ursprungs, ausgewählt aus Polyolefinen, Polystyrolen, Vinylcopolymeren und synthetischen Polyestern ist.

5. Verfahren nach einem der Ansprüche 3 oder 4, dadurch gekennzeichnet, daß :
- das eine der Polymere eine Stärke ist,
- das andere der Polymere ein Polymeres synthetischen Ursprungsd, bevorzugt ein Polyethylen, ein Polypropylen, ein Polystyrol, ein Polyvinylalkohol (PVOH), ein Polyvinylchlorid (PVC) oder Poly-epsilon-Caprolacton (PCL) ist,
- das Gewichtsverhältnis zwischen der Stärke und dem Polymeren synthetischen Ursprungs in dem Gemisch zwischen etwa 1/20 und 20/1, bevorzugt zwischen 1/10 und 10/1 liegt.

6. Verfahren nach einem der Ansprüche 1 bis 5, dadurch gekennzeichnet, daß das Cyclodextrin. in Form einer Zusammensetzung, die außer dem Cyclodextrin mindestens einen Bestandteil, ausgewählt aus konstitutiven Polymeren des Gemisches der Polymeren, Weichmachern, Nucleierungsmitteln, bestehend aus Alditolacetalen, und Kompatibilisierungsmitteln, bestehend aus ethylenischen Polymeren, enthält, eingebracht wird.

7. Verfahren nach Anspruch 6, dadurch gekennzeichnet, daß das konstitutive Polymere des Gemisches eine Stärke ist, und daß das Gewichtsverhältnis zwischen Cyclodextrin und Stärke zwischen etwa 1/1 und etwa 1/100, bevorzugt zwischen ½ und 1/50, und noch bevorzugter zwischen 1/5 und 1/50 liegt.

8. Verfahren nach einem der Ansprüche 6 oder 7, dadurch gekennzeichnet, daß die Zusammensetzung mindestens einen Weichmacher, insbesondere mindestens ein Polyol enthält, wobei das Gewichtsverhältnis zwischen Cyclodextrin und Weichmacher zwischen etwa 2/1 und etwa 1/50, bevorzugt zwischen 2/1 und 1/10, und noch bevorzugter zwischen 1/1 und 1/10 liegt.

9. Verwendung eines Gemisches aus Polymeren erhalten nach einem der Ansprüche 1 bis 8 zur Herstellung, insbesondere durch Extrusion, Koextrusion, Injektionsformgießen, Formgießen durch Verblasen oder Kalandrieren, von thermogeformten Artikeln, die dann gegebenenfalls insbesondere durch Anwendung von hohen Frequenzen, Hyperfrequenzen oder Mikrowellen, verschweißt werden.

10. Zusammensetzung auf der Grundlage von Stärke und Weichmachern, dadurch gekennzeichnet, daß sie ein Cyclodextrin enthält, daß das Gewichtsverhältnis zwischen dem Cyclodextrin und der Stärke zwischen etwa 1/5 und etwa 1/50 liegt, und daß das Gewichtsverhältnis zwischen dem Cyclodextrin und dem Weichmacher zwischen etwa 1/1 und etwa 1/10 liegt, und die Zusammensetzung bevorzugt in Form eines Pulvers oder Granulats vorliegt.

11. Verwendung eines Cyclodextrins zur Verbesserung der reziproken Kompatibilität von Polymeren, insbesondere der reziproken Kompatibilität eines natürlichen Polymeren und eines synthetischen Polymeren und insbesondere der reziproken Kompatibilität eines Teils einer Stärke und eines anderen Teils von Poly-epsilon-Caprolacton oder eines Polyethylens.

## Claims

1. Process for improving the mutual compatibility of polymers, characterised in that an effective amount of cyclodextrin is included in the mixture of said polymers.

2. Process according to claim 1, characterised in that the amount of cyclodextrin represents from about 0.5 to about 20%, preferably from 1 to 10%, by weight of the resulting mixture.

3. Process according to any one of claim 1 or 2, characterised in that at least one of said polymers is a polymer of natural origin selected from the group consisting of starches, polyfructans, celluloses and hemicelluloses, plant proteins, and polymers and copolymers of lactic acid, glycolic acid, hydroxybutyric acid, hydroxypropionic acid or hydroxyvalerianic acid.

4. Process according to any one of claims 1 to 3, characterised in that at least one of said polymers is a polymer of synthetic origin selected from the group consisting of polyolefins, polystyrenes, vinylic copolymers and synthetic polyesters.

5. Process according to claim 3 or 4, characterised in that :
- one of said polymers is a starch,
- another of said polymers is a polymer of synthetic origin, preferably a polyethylene, a polypropylene, a polystyrene, a polyvinyl alcohol (PVOH), a polyvinyl chloride (PVC) or poly(ε-caprolactone) (PCL),
- the weight ratio between the starch and the polymer of synthetic origin in the mixture is between about 1/20 and about 20/1, preferably between 1/10 and 10/1.

6. Process according to any one of claims 1 to 5, characterised in that the cyclodextrin is provided in the form of a composition containing, besides said cyclodextrin, at least one constituent selected from the group consisting of the polymers constituting the polymer mixture, plasticizers, nucleation agents consisting of alditol acetals and compatibilizing agents consisting of ethylenic copolymers.

7. Process according to Claim 6, characterised in that the polymer constituting the mixture is a starch and the weight ratio between cyclodextrin and starch is between about 1/1 and about 1/100, preferably between 1/2 and 1/50, and even more preferably between 1/5 and 1/50.

8. Process according to claim 6 or 7, characterised in that the composition contains at least one plasticizer, in particular at least one polyol, the weight ratio between cyclodextrin and plasticizer being between about 2/1 and about 1/50, preferably between 2/1 and 1/10, and even more preferably between 1/1 and 1/10.

9. Use of a mixture of polymers obtained according to any one of claims 1 to 8 for the preparation, in particular by extrusion, co-extrusion, injection casting, blow-moulding or calendering, of articles which are thermoformed, then possibly welded, in particular by the application of high frequencies, ultrahigh frequencies or microwaves.

10. Composition based on starch and plasticizer, characterised in that it contains a cyclodextrin, and in that the weight ratio between the cyclodextrin and the starch is between about 1/5 and about 1/50, and in that the weight ratio between the cyclodextrin and the plasticizer is between about 1/1 and about 1/10, said composition preferably being in the form of a powder or granules.

11. Use of a cyclodextrin to improve the mutual compatibility of polymers, in particular the mutual compatibility of a natural polymer and a synthetic polymer, and in particular the mutual compatibility of starch on the one hand and poly(ε-caprolactone) or a polyethylene on the other hand.
